# EUROPÄISCHE PATENTSCHRIFT

(11) **EP 2 442 088 B1**
(45) Veröffentlichungstag und Bekanntmachung des Hinweises auf die Patenterteilung: **28.08.2013**
(21) Anmeldenummer: 10187255.4
(22) Anmeldetag: 12.10.2010
(51) Int. Cl.: G01M 1/10, G01M 1/26

(54) **Klemmvorrichtung für Turbinenschaufel**
Clamping device for turbine blade
Dispositif de blocage pour une aube de turbine

(43) Veröffentlichungstag der Anmeldung: 18.04.2012
(73) Patentinhaber: Siemens Aktiengesellschaft, 80333 München (DE)
(72) Erfinder: Baum, Christian, 12309, Berlin (DE); Jahnke, Ronny, 14612, Falkensee (DE)

(56) Entgegenhaltungen:
- DE-U1- 20 208 233
- US-A1- 2005 091 846

## Beschreibung

Die Erfindung betrifft eine Messvorrichtung mit einem schwerpunktneutralen Exzenter.

US 2005/0091846 Al beschreibt eine Vorrichtung zum Wiederherstellen von Turbinenschaufeln, in der die Schaufel für den Wiederherstellungsprozess in eine Spannhalterung eingesetzt wird.

DE 202 08 233 U1 beschreibt eine Fixier- und Halteanordnung für ein teleskopisches Rohr, welches ein Außenrohr, ein in das Außenrohr eingesetztes Innenrohr, am Innenrohr in Radialrichtung bewegbar angeordnete Blöcke und einen im Innenrohr angeordneten elliptischen Stab umfasst. Der Querschnitt des elliptischen Stabes weist in x- und y-Richtung unterschiedliche Durchmesser auf. Somit ändert sich, wenn der elliptische Stab rotiert, dessen Durchmesser, um die bewegbaren Blöcke radial nach außen gegen den Innenumfang des Außenrohres zu pressen. Dadurch wird eine das Innenrohr fixierende Reibungskraft hervorgerufen.

Arten von Spannhalterungen kommen bspw. auch in Messvorrichtung zur Bestimmung von Momentengewichten zum Einsatz.

Bei der Bestimmung von Momentengewichten zum Beispiel von Turbinen- oder Verdichterlaufschaufeln müssen die zu wiegenden Schaufeln mittels einer Messvorrichtung exakt und reproduzierbar auf einer Momentenwaage fixiert und zentriert werden.

Oft wird zur Fixierung des Messobjekts ein Exzenter verwendet. Die beim Spannen auftretende Schwerpunktänderung beeinflusst das Messergebnis und wird vernachlässigt.

Es ist Aufgabe der Erfindung, die Momentenmessung von Messobjekten zu verbessern.

Diese Aufgabe wird erfindungsgemäß mit den Merkmalen des Anspruchs 1 gelöst.

Gemäß der Erfindung umfasst eine Messvorrichtung für eine Turbinen- oder Verdichterschaufel eine Messaufnahme und einen Exzenter zum Einspannen der Turbinen- oder Verdichterschaufel in die Messaufnahme. Der Exzenter umfasst eine Rotationsachse und einen Exzenterbereich, wobei der Massenschwerpunkt des Exzenters auf der Rotationsachse liegt. Dieser Exzenter ist auf den Massenschwerpunkt bezogen symmetrisch, das heißt, dass er in jeder rotatorischen Lage denselben Massenschwerpunkt hat. Damit fällt eine Rotation des Exzenters um seine Längs- beziehungsweise Rotationsachse, wie beim Einspannen des Messobjekts vorgenommen, bei der Momentenmessung zum Beispiel auf einer Momentenwaage nicht ins Gewicht. Dadurch wird eine sichere und reproduzierbare Messung erzielt, die unabhängig von der Stellung des Exzenters ist. Ein derartiger Exzenter wird nachfolgend als schwerpunktneutraler Exzenter bezeichnet.

Insbesondere liegt der Massenschwerpunkt des Exzenterbereichs auf der Rotationsachse, so dass die Zentrierung des Massenschwerpunkts auf die Rotationsachse direkt im Exzenterbereich vorgenommen wird. Damit liegt der Massenschwerpunkt in axialer Richtung zentral, was eine bessere Handhabung des Exzenters erlaubt.

Der Exzenterbereich kann punktsymmetrisch zur Rotationsachse ausgebildet sein. Auf diese Weise kann erzielt werden, dass der Massenschwerpunkt auf der Rotationsachse liegt. Die Punktsymmetrie erlaubt, dass eine auf das Messobjekt einwirkende Geometrie des Exzenterbereichs mehrfach über den Umfang des Exzenterbereichs verteilt angeordnet sein kann, zum Beispiel vier Mal. Eine der Geometrien wird zur Befestigung des Messobjekts verwendet, die andere oder die anderen dienen dazu, den Massenschwerpunkt während einer Drehung des Exzenters fix zu halten. Das Vorhandensein mehrerer Geometrien hat den weiteren Vorteil, dass bei der Fixierung des Messobjekts lediglich eine Teildrehung des Exzenters nötig ist, da eine der Geometrien schneller eingreift als wenn eine einzige Geometrie vorhanden ist. Noch ein weiterer Vorteil ist, dass bei Verschleiß einer Geometrie die übrigen Geometrien eingesetzt werden können.

Der Exzenterbereich kann achssymmetrisch ausgebildet sein. Die Symmetrieebene läuft dabei durch die Rotationsachse. So können zum Beispiel zwei Geometrien, die auf das Messobjekt einwirken, vorgesehen sein. Die beiden Geometrien sind gegenüberliegend auf der Umfangsfläche des Exzenterbereichs angeordnet. Während eine Geometrie das Messobjekt einspannt, ist die andere Geometrie im Hinblick auf das Einspannen ein "Dummy". Die andere Geometrie erfüllt den Zweck, dass der Massenschwerpunkt auf der Rotationsachse liegt.

Die Massendichte des Exzenterbereichs kann in radialer Richtung variieren. Bislang wurde die äußere Form des Exzenterbereichs entsprechend gestaltet, um den Massenschwerpunkt auf der Rotationsachse zu halten. Eine weitere Möglichkeit ist es, die Massendichte zu variieren. Beide Möglichkeiten können miteinander kombiniert werden. Die Massendichte kann zum Beispiel derart in radialer Richtung angepasst sein, dass in dem der auf das Messobjekt einwirkenden Geometrie gegenüberliegenden Bereich die Massendichte so erhöht ist, dass damit das Gewicht der Geometrie ausgeglichen wird und der Massenschwerpunkt auf der Rotationsachse liegt. Die Massendichte des Exzenterbereichs kann bspw. durch die Verwendung von Materialien mit unterschiedlichen Dichten oder durch Verwendung eines einzigen Materials, wobei der Bereich mit geringerer Massendichte Holräume aufweist, variiert werden. In einem einfachen Fall reicht es aus, im Bereich der einwirkenden Geometrie axial verlaufende Bohrungen einbringen, um den Massenschwerpunkt in die Rotationsachse zu verlagern.

Ein Betätigungsbereich kann an einem axialen Ende des Exzenters angeordnet sein, um einem Bediener eine Drehung des Exzenters zu erlauben. So können Messobjekte einfach eingespannt und wieder ausgespannt werden.

Im Folgenden wird die Erfindung anhand der Zeichnungen näher beschrieben.
Figur 1 zeigt eine perspektivische Darstellung einer Messvorrichtung mit schwerpunktneutralem Exzenter gemäß der Erfindung.
Figur 2 zeigt eine Schnittdarstellung der Messvorrichtung und des schwerpunktneutralen Exzenters gemäß der Erfindung.
Figur 3 zeigt eine Schnittdarstellung der Messvorrichtung und des schwerpunktneutralen Exzenters in Draufsicht gemäß der Erfindung.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

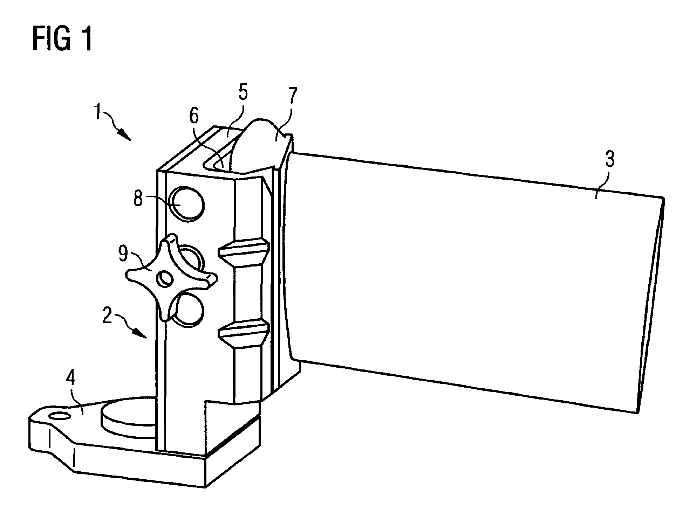

Figur 1 zeigt eine Messvorrichtung 1 mit einer Messaufnahme 2 für ein Messobjekt wie zum Beispiel eine Turbinenschaufel oder eine Verdichterschaufel 3 (im folgenden "Schaufel" genannt). Die Messaufnahme 2 umfasst eine Basisplatte 4. Mittels der Basisplatte 4 wird die Messvorrichtung 1 an einer nicht dargestellten Momentenwaage oder einer Zwischenkonstruktion zur Vermessung der Schaufel 3 befestigt.

Auf der Basisplatte 4 ist eine Halterung 5 im Wesentlichen vertikal befestigt. In der Halterung 5 ist eine Aufnahmeöffnung 6 ausgebildet, in der ein Fuß 7 der Schaufel 3 befestigt ist. Die Halterung 5 und die Aufnahmeöffnung 6 können zum Beispiel als Nutklotz ausgebildet sein. In der Aufnahmeöffnung 6 sind mehrere Gleitlager 8 angeordnet, welche das Einlegen der Schaufel 3 in die Messaufnahme 2 erleichtern. Mittels eines Exzenters 9 wird der Fuß 7 der Schaufel 3 in der Aufnahmeöffnung 6 verspannt, so dass die Schaufel 3 sicher und reproduzierbar befestigt ist.

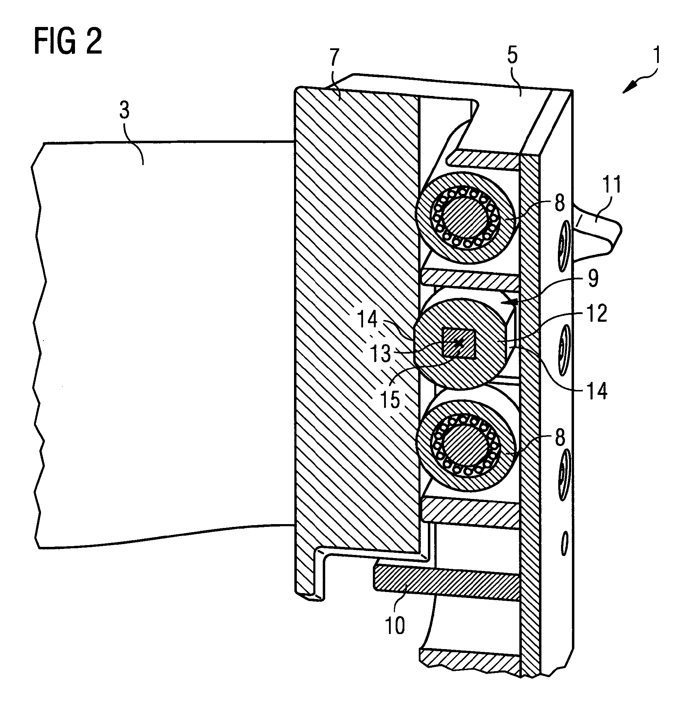

In Figur 2 ist eine Schnittdarstellung der Messvorrichtung 1 mit dem schwerpunktneutralen Exzenter 9 gezeigt. Zwei Gleitlager 8 sind vertikal übereinander in der Halterung 5 angeordnet. Ein Teil der Gleitlager 8 ragt in die Aufnahmeöffnung 6 und zwar in einem Basisbereich der U-förmigen Aufnahmeöffnung 6. Damit unterstützen die Gleitlager 8 das Einlegen und Entnehmen der Schaufel 3. Weitere Gleitlager 8 können an den beiden seitlichen Bereichen der Aufnahmeöffnung 6 angeordnet sein. Im unteren Bereich der Aufnahmeöffnung 6 ist ein Anschlag 10 angeordnet, auf dem ein Teil des Fußes 7 der Verdichterschaufel 3 aufliegt.

Der schwerpunktneutrale Exzenter 9 ist zwischen den beiden Gleitlagern 8 angeordnet und ragt ebenfalls in die Aufnahmeöffnung 6, so dass Kontakt zum Schaufelfuß 7 der Schaufel 3 besteht. Der Exzenter 9 umfasst einen Betätigungsbereich in Form eines Knaufs oder Griffs 11 zum Betätigen, das heißt Drehen, und einen Exzenterbereich 12 zum Festspannen der Schaufel 3. Dieser Exzenterbereich 12 ist mit dem Griff 11 über eine Welle 15 verbunden, die im vorliegenden Ausführungsbeispiel eine mittels Formschluss mit dem Exzenterbereich 12 verbundene Vierkantwelle ist. Der Exzenterbereich 12 kann sich über die volle Breite des Fußes 7 oder über einen Teil der Breite erstrecken. Der Exzenter 9 ist drehbar gelagert, so dass er mittels des Griffs 11 um eine durch die Längsachse der Welle 15 gegebene Rotationsachse 13 gedreht werden kann.

Der Exzenterbereich 12 hat zwei auf das Messobjekt, hier in Form der Schaufel 3, einwirkende Geometrien 14, wobei nur eine der beiden Geometrien zu einem Zeitpunkt auf den Schaufelfuß 7 einwirken kann. Die beiden Geometrien 14 sind symmetrisch zu verlaufenden Rotationsachse 13 angeordnet, so dass der Massenschwerpunkt des Exzenters 9 auf der Rotationsachse 13 liegt. Dies schafft den schwerpunktneutralen Exzenter 9, der in jeder Stellung denselben Massenschwerpunkt hat. Damit entstehen bei Drehung des Exzenters 9 keine Änderungen hinsichtlich des Massenschwerpunkts der Messvorrichtung 1 und die Messung des Messobjekts wird daher nicht beeinflusst.

Die Geometrie 14 kann wie gezeigt zwei Mal auf der Umfangsfläche des Exzenterbereichs 12 angeordnet sein. Es ist auch möglich, noch mehr Geometrien 14 vorzusehen, zum Beispiel vier Geometrien 14. Wichtig ist eine gerade Anzahl und eine symmetrische Anordnung der Geometrien 14, um den Massenschwerpunkt des Exzenters 9 auf der Rotationsachse 13 anzuordnen. Der Begriff Geometrie kann auch umfassender verstanden werden, so dass die Geometrie die komplette Umfangsfläche beinhaltet. Neben der Ausbildung und/oder Anordnung der Geometrien 14 kann auch die Massendichte des Exzenterbereichs 12 in radialer Richtung variiert werden. Die Ausrichtung des Massenschwerpunkts auf die Rotationsachse kann also durch die geometrische Ausbildung des Exzenterbereichs 12 und/oder eine Variation der Massendichte erreicht werden.

Beschrieben wurde die Ausrichtung des Massenschwerpunkts durch die Gestaltung des Exzenterbereichs 12. Auch ein Exzenterbereich, dessen Massenschwerpunkt nicht auf der verlaufenden Rotationsachse 13 liegt, kann ausgeglichen werden. Der Ausgleich kann durch Gestaltung von Form und Material in anderen axialen Bereichen des Exzenters 9, wie zum Beispiel dem Griff oder der Welle 15 erfolgen.

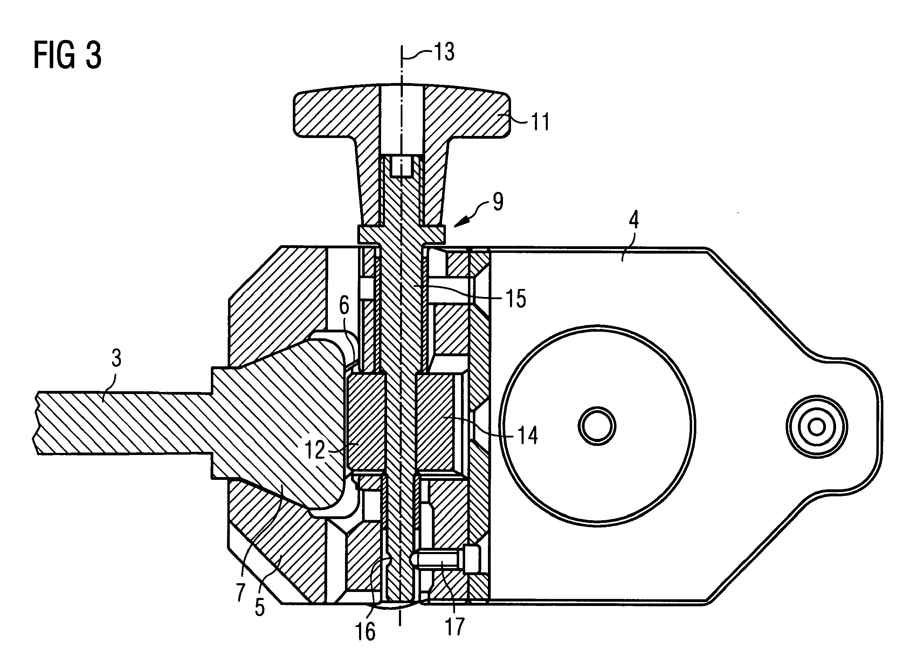

In Figur 3 ist die Messvorrichtung 1 in einer Schnittdarstellung in Draufsicht gezeigt. Die Basisplatte 4 kann mittels Schrauben, Stiften, Bolzen oder ähnlichen Befestigungsmitteln an einer Momentenwaage befestigt werden. Die in der Halterung 5 ausgebildete Aufnahmeöffnung 6 ist in ihrer Kontur an den Schaufelfuß 7 der Schaufel 3 angepasst, um eine sichere Fixierung der Schaufeln 3 zu garantieren. Insbesondere laufen Seitenbereiche der Aufnahmeöffnung 6 konisch zu, um an den Schaufelfuß 7 angepasst zu sein. In einem rückwärtigen Teil der Aufnahmeöffnung 6 sind die in dieser Figur nicht dargestellten Gleitlager und der schwerpunktneutrale Exzenter 9 angeordnet.

Der Exzenter 9 ist in der Halterung 5 drehbar gelagert und kann mittels des Griffs 11 um eine Rotationsachse 13 gedreht werden. Bei der Drehung wird eine Geometrie 14 des Exzenterbereichs 12 gegen den Schaufelfuß 7 gedrückt, wodurch der Schaufelfuß 7 gegen die konisch zulaufenden Seitenwände der Aufnahmeöffnung 6 gepresst wird und damit die Schaufel 3 sicher und reproduzierbar in der Messaufnahme 11 fixiert ist.

Die Geometrie 14 kann derart ausgebildet sein, dass eine Fixierung der Schaufel 3 durch Rotation des Exzenters 9 in beide Richtungen möglich ist. Das Material des Exzenterbereichs 12 beziehungsweise der Geometrie 14 kann eine leichte elastische Verformbarkeit aufweisen, um eine bessere Anpassung an den Fuß 7 der Schaufel 3 zu ermöglichen.

Der schwerpunktneutrale Exzenter 9 umfasst hier eine Welle 15, an deren einem Ende der Griff 11 befestigt ist. Der Griff kann auch einstückig mit der Welle 15 ausgebildet sein. Der Griff 11 und die Welle 15 sind mit der Rotationsachse 13 zentriert ausgebildet. In einem mittleren Bereich der Welle 15 ist der Exzenterbereich 12 angeordnet. Der Exzenterbereich 12 kann auf die Welle 15 aufgebracht sein, zum Beispiel auf eine Vierkantwelle aufgeschoben und durch Formschluss gehalten, oder er kann einstückig mit der Welle 15 ausgebildet sein. Der Exzenterbereich 12 umfasst zwei Geometrien 14, die so angeordnet sind, dass der Massenschwerpunkt des Exzenterbereichs 12 und damit des gesamten Exzenters 9 auf der Rotationsachse 13 liegt. An einem zweiten Ende weist die Welle 15 eine umlaufende Nut 16 auf, in welche die Spitze einer Sicherungsschraube 17 eingreifen kann, um eine Verschiebung des Exzenters 9 in axialer Richtung zu verhindern. Die Sicherungsschraube 17 ist in der Halterung 5 angebracht.

Die Messvorrichtung 1 wird verwendet, wie im Folgenden beschrieben ist. Zunächst wird die Messvorrichtung 1 auf einer Momentenwaage oder einem ähnlichen Messgerät befestigt. Anschließend wird der Schaufelfuß 7 der Schaufel 3 in die Aufnahmeöffnung 6 der Messaufnahme 2 eingeführt bis der Schaufelfuß 7 auf dem Anschlag 10 zur Anlage kommt. Dabei unterstützen die Gleitlager 8 eine reibungslose Bewegung des Schaufelfußes 7 in der Aufnahmeöffnung 6.

Nun wird die Schaufel 3 mit Hilfe des schwerpunktneutralen Exzenters 9 verspannt. Dazu wird der Exzenter 9 unter Benutzung des Griffs 11 um die Rotationsachse 13 gedreht, wobei eine Geometrie 14 des Exzenterbereichs 12 zur Anlage an den Schaufelfuß 7 gelangt. Aufgrund der exzentrischen Ausgestaltung des Exzenterbereichs 12 wird durch weitere Drehung eine Kraft auf den Schaufelfuß 7 ausgeübt. Diese Kraft presst den Schaufelfuß 7 gegen die konisch zulaufenden Seitenbereiche der Aufnahmeöffnung 6, so dass der Schaufelfuß 7 und damit die Schaufel 3 sicher und reproduzierbar in der Messaufnahme 2 gehalten wird. Mittels der Sicherungsschraube 17 wird die Verschiebung des Exzenters 19 in axialer Richtung verhindert.

Nach erfolgter Messung wird der Exzenter 9 durch Drehung in entgegengesetzte Richtung gelöst. Anschließend wird die Schaufel 3 aus der Aufnahmeöffnung 6 entfernt.

## Patentansprüche

1. Messvorrichtung für eine Turbinen- oder Verdichterschaufel (3), mit einer Messaufnahme (2) und einem Exzenter (9) zum Einspannen der Turbinen- oder Verdichterschaufel (3) in der Messaufnahme (2), wobei der Exzenter (9) ein Exzenter mit einer Rotationsachse (13) und einem Exzenterbereich (12) ist, wobei der Massenschwerpunkt des Exzenters (9) auf der Rotationsachse (13) liegt.

2. Messvorrichtung nach Anspruch 1,
wobei der Massenschwerpunkt des Exzenterbereichs (12) auf der Rotationsachse (13) liegt.

3. Messvorrichtung nach Anspruch 1 oder 2, wobei der Exzenterbereich (12) punktsymmetrisch zur Rotationsachse (13) ausgebildet ist.

4. Messvorrichtung nach einem der Ansprüche 1 bis 3,
wobei der Exzenterbereich (12) achssymmetrisch ausgebildet ist.

5. Messvorrichtung nach einem der Ansprüche 1 bis 4,
wobei die Massendichte des Exzenterbereichs (12) in radialer Richtung variiert.

6. Messvorrichtung nach Anspruch 5,
wobei der Exzenterbereich (12) eine auf die Turbinen- oder Verdichterschaufel (3) einwirkende Geometrie aufweist und die Massendichte des Exzenterbereichs (12) in radialer Richtung derart variiert, dass in einem der auf die Turbinen- oder Verdichterschaufel (3) einwirkenden Geometrie gegenüberliegenden Bereich die Massendichte so erhöht ist, dass damit das Gewicht der Geometrie ausgeglichen wird und der Massenschwerpunkt auf der Rotationsachse liegt.

7. Messvorrichtung nach Anspruch 5 oder Anspruch 6,
wobei die Variation der Massendichte des Exzenterbereichs (12) in radialer Richtung durch die Verwendung von Materialien mit unterschiedlichen Dichten erreicht wird.

8. Messvorrichtung nach Anspruch 5 oder Anspruch 6,
wobei die Variation der Massendichte des Exzenterbereichs (12) in radialer Richtung durch die Verwendung eines einzigen Materials erreicht wird, wobei der Bereich mit geringerer Massendichte Holräume aufweist.

9. Messvorrichtung nach einem der Ansprüche 1 bi 8,
wobei der Massenschwerpunkt des Exzenterbereichs (12) außerhalb der Rotationsachse (13) liegt und der Ausgleich in einem anderen axialen Bereich des Exzenters erfolgt.

10. Messvorrichtung nach einem der Ansprüche 1 bis 9,
wobei ein Betätigungsbereich (11) an einem axialen Ende des Exzenters (9) angeordnet ist.

## Claims

1. Measurement device for a turbine or compressor blade (3), having a measurement receptacle (2) and having an eccentric (9) for clamping the turbine or compressor blade (3) in the measurement receptacle (2), wherein the eccentric (9) is an eccentric having an axis of rotation (13) and having an eccentric region (12), wherein the centre of mass of the eccentric (9) lies on the axis of rotation (13).

2. Measurement device according to Claim 1, wherein the centre of mass of the eccentric region (12) lies on the axis of rotation (13).

3. Measurement device according to Claim 1 or 2, wherein the eccentric region (12) is point-symmetrical with respect to the axis of rotation (13).

4. Measurement device according to one of Claims 1 to 3, wherein the eccentric region (12) is of axially symmetrical design.

5. Measurement device according to one of Claims 1 to 4, wherein the mass density of the eccentric region (12) varies in the radial direction.

6. Measurement device according to Claim 5,
wherein the eccentric region (12) has a geometry which acts on the turbine or compressor blade (3), and the mass density of the eccentric region (12) varies in the radial direction such that, in a region situated opposite the geometry which acts on the turbine or compressor blade (3), the mass density is increased such that, in this way, the weight of the geometry is compensated and the centre of mass lies on the axis of rotation.

7. Measurement device according to Claim 5 or Claim 6, wherein the variation of the mass density of the eccentric region (12) in the radial direction is realized through the use of materials of different densities.

8. Measurement device according to Claim 5 or Claim 6, wherein the variation of the mass density of the eccentric region (12) in the radial direction is realized through the use of a single material, wherein the region of lower mass density has cavities.

9. Measurement device according to one of Claims 1 to 8, wherein the centre of mass of the eccentric region (12) lies outside the axis of rotation (13) and the compensation takes place in another axial region of the eccentric.

10. Measurement device according to one of Claims 1 to 9, wherein an actuating region (11) is arranged on one axial end of the eccentric (9).

## Revendications

1. Dispositif de mesure pour une aube ( 3 ) de turbine ou de compresseur, comprenant un logement ( 2 ) de mesure et un excentrique ( 9 ) pour le blocage de l'aube ( 3 ) de turbine ou de compresseur dans le logement ( 2 ) de mesure, l'excentrique étant un excentrique ayant un axe ( 13 ) de rotation et une zone ( 12 ) d'excentrique, le centre de gravité de l'excentrique ( 9 ) se trouvant sur l'axe ( 13 ) de rotation.

2. Dispositif de mesure suivant la revendication 1,
dans lequel le centre de gravité de la zone ( 13 ) d'excentrique se trouve sur l'axe ( 13 ) de rotation.

3. Dispositif de mesure suivant la revendication 1 ou 2,
dans lequel la zone ( 12 ) d'excentrique est à symétrie ponctuelle par rapport à l'axe ( 13 ) de rotation.

4. Dispositif de mesure suivant l'une des revendications 1 à 3,
dans lequel la zone ( 12 ) d'excentrique est à symétrie axiale.

5. Dispositif de mesure suivant l'une des revendications 1 à 4,
dans lequel la masse volumique de la zone ( 12 ) d'excentrique varie dans la direction radiale.

6. Dispositif de mesure suivant la revendication 5,
dans lequel la zone ( 12 ) d'excentrique a une géométrie agissant sur l'aube ( 3 ) de turbine ou de compresseur et la masse volumique de la zone ( 12 ) d'excentrique varie dans la direction radiale, de manière à ce que, dans une zone opposée à la géométrie agissant sur l'aube ( 3 ) de turbine ou de compresseur, la masse volumique soit si augmentée qu'ainsi le poids de la géométrie est compensée et que le centre de gravité se trouve sur l'axe de rotation.

7. Dispositif de mesure suivant la revendication 5 ou 6,
dans lequel la variation de la masse volumique de la zone ( 12 ) d'excentrique dans la direction radiale est obtenue en utilisant des matériaux de masse volumique différente.

8. Dispositif de mesure suivant la revendication 5 ou 6,
dans lequel la variation de la masse volumique de la zone ( 12 ) d'excentrique dans la direction radiale est obtenue en utilisant un matériau unique, la zone de masse volumique plus petite ayant des cavités.

9. Dispositif de mesure suivant l'une des revendications 1 à 8,
dans lequel le centre de gravité de la zone ( 12 ) d'excentrique est en-dehors de l'axe ( 13 ) de rotation et la compensation s'effectue dans une autre zone axiale de l'excentrique.

10. Dispositif de mesure suivant l'une des revendications 1 à 9,
dans lequel une zone ( 11 ) d'actionnement est disposée à une extrémité axiale de l'excentrique ( 9 ).
